# EUROPEAN PATENT SPECIFICATION

(11) **EP 3 767 144 B1**
(45) Date of publication and mention of the grant of the patent: **13.09.2023**
(21) Application number: 19187354.6
(22) Date of filing: 19.07.2019
(51) Int. Cl.: F16L 3/10, G02B 6/44, H02G 3/32

(54) **MICRO-DUCT GRIP**
MIKROKANALGRIFF
POIGNÉE DE MICRO-CONDUIT

(43) Date of publication of application: 20.01.2021
(73) Proprietor: Raycap IP Development Ltd., Nicosia (CY)
(72) Inventor: MARATHIAS, Megaklis, 2012 Strovolos, Nicosia (CY)
(74) Representative: Wilson Gunn

(56) References cited:
- GB-A- 637 657
- GB-A- 2 452 780
- US-A1- 2012 043 432
- US-A1- 2014 314 388

## Description

### TECHNICAL FIELD

One or more implementations relate generally to a micro-duct grip.

### BACKGROUND

Fiber-optic distribution cabinets are basic elements of telecommunication networks. The distribution cabinets house network interconnections leading to subscribers and are used for managing fiber-optic cables and protecting fiber-optic cables against outdoor environmental conditions. Fiber-optic cables are often inserted into outdoor network cabinets through the ground and inserted into preinstalled protective micro-ducts (plastic tubes).

Large numbers of fiber-optic cables and micro-ducts need to be managed in cabinets. In order to reduce the cost and complexity of deployment, apparatus within the cabinets should require minimal time, effort and tools and provide fast and simple installation. In addition, cables and micro-ducts should also be easy to access and remove.

For instance, US 2014/314 388 A1 shows a strain relief device for anchoring a fiber optic cable to telecommunications equipment. The device has a base defining a base channel that receives a first side of the fiber optic cable and a cover defining a cover channel that receives a second side of the fiber optic cable. The base and the cover are connected to each other by mating sliding coupling structures formed on the base and the cover.

From US 2012/043 432 A1 an assembly is known, the assembly being adapted to be mounted on a structural support member to hold a pipe in a desired location. A base portion of the assembly includes a cradle having slide channels on a pair of opposite sidewalls. A clamping body includes flanges that fit in the slide channels. Locking tabs that may be extensions of the flanges may be bent to engage retention faces of retainer legs on the base portion to keep the clamping body in place.

Further, GB 2 452 780 A discloses a restraining device providing a way of forming a connection to a cable duct. The device has a pair of restrainers linked together by links, which clamp about an uncut region of the cable duct. In one embodiment, the restrainers are mode of pairs of clamps, sliders and grippers, the clamps having tapered flanges.

In the outdoor environment, cabinets are often subjected to violent events, such as motor vehicle accidents in which the cabinets can be partially destroyed or deformed. In such cases, micro-ducts inserted in the cabinet through the ground could be violently pulled out from the cabinet with strong tensile forces that could damage the cables and the cable connections. To prevent this kind of damage, the cables should be tightly secured inside the cabinets and provided with strain relief.

### SUMMARY

The claimed invention provides a fiber-optic tube holder which includes a base member having an opening for receiving a tube. A back end of the opening includes a first channel for retaining a first side of the tube. Sides of the opening include a first pair of tapered cavities. A front end of the base member includes a second pair of cavities separated by a slot. A locking member includes a back wall including a second channel for retaining a second side of the tube. The back wall has a tapered profile for inserting down into the first pair of tapered cavities in the base member. A front wall extends out in front of the back wall and includes arms being configured to slide down into the second pair of cavities in the base member.

### BRIEF DESCRIPTION OF THE DRAWINGS

The included drawings are for illustrative purposes and serve to provide examples of possible structures and operations for the disclosed inventive apparatus.
FIG. 1 shows a perspective view of micro-duct grips holding micro-ducts on a mounting assembly.
FIG. 2A shows one of the micro-duct grips of FIG. 1 in a closed position.
FIG. 2B shows the micro-duct grip in an open position.
FIG. 2C shows a top view of the micro-duct grip in a closed position.
FIG. 3A shows a perspective view of a base unit of the micro-duct grip.
FIG. 3B shows a side view of the base unit in FIG. 3A.
FIG. 3C shows a top view of the base unit in FIG. 3A.
FIG. 4A shows a perspective view of a locking unit of the micro-duct grip.
FIG. 4B shows a perspective side view of the locking unit in FIG. 4A.
FIG. 4C shows a top view of the locking unit in FIG. 4A.

### DETAILED DESCRIPTION

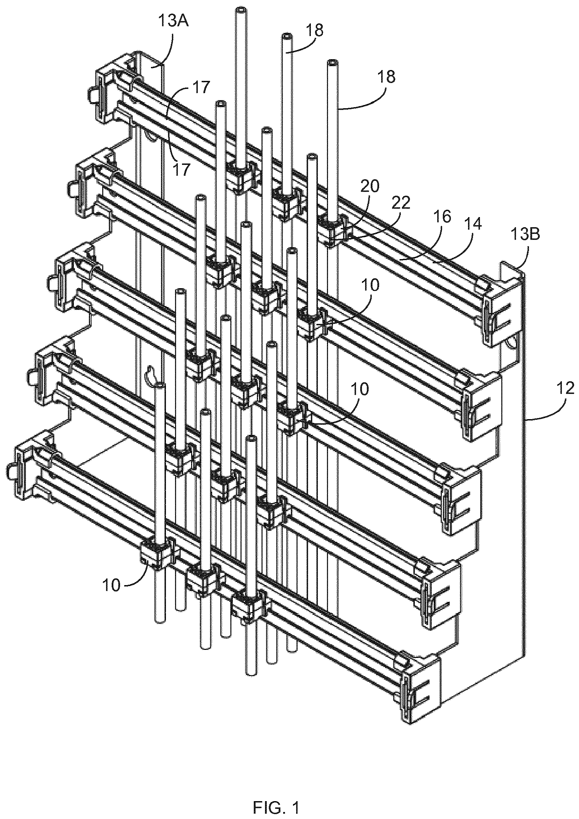

FIG. 1 shows micro-duct grips 10 attached to a mounting assembly 12 that attaches inside of a fiber-optic distribution cabinet (not shown). Mounting assembly 12 may include mounting plates 13A and 13B that include holes on back ends for screwing into the distribution cabinet. Mounting assembly 12 also may include racks 14 that extend across the front ends of mounting plates 13 for retaining micro-ducts 18. In one example, micro-ducts 18 may hold fiber-optical cables. The front ends of mounting plates 13 may be stair-stepped to hold micro-ducts 18 in different offset rows.

Micro-duct grips 10 are configured to insert into slots 16 that extend along the length of racks 14. Slots 16 are formed by two rails 17 that extend from the top and bottom ends of racks 14. Each rack 14 can be disconnected from mounting plates 13. Back ends of grips 10 are inserted through open ends of racks 14 into slots 16 and slid to any position along rack 14. Racks 14 are then reconnected to mounting plates 12.

Micro-duct grips 10 each include a base unit 20 that includes a back end that inserts into slots 16 of rack 14. Base units 20 include openings for receiving one of micro-ducts 18. A locking unit 22 also inserts into the opening of base unit 20 securing micro-duct 18 into base unit 20. As mentioned above, micro-ducts 18 are alternatively referred to as tubes. In the examples below micro-duct grips 10 retain micro-ducts 18 that hold fiber-optic cables. However, it should be understood that micro-duct grips 10 can hold any type of cable, tube, or conduit that holds any type of power line, data line, or any other material.

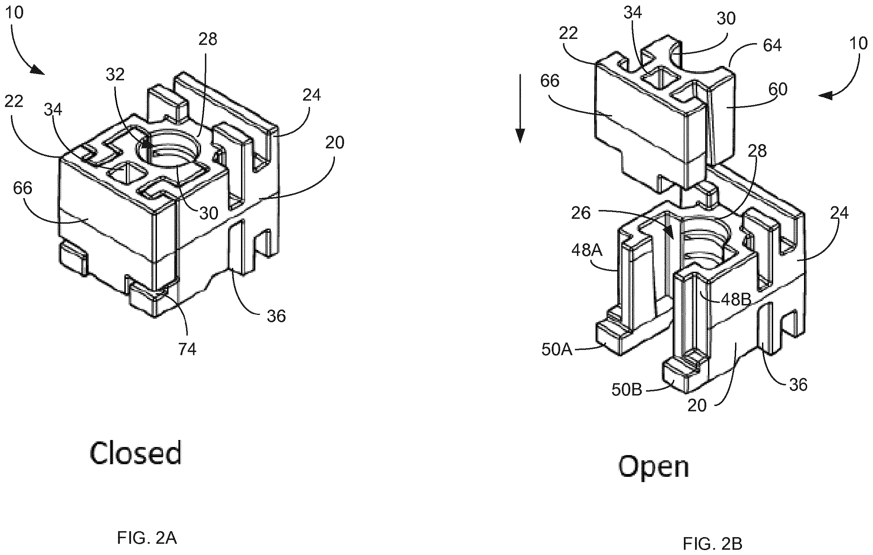

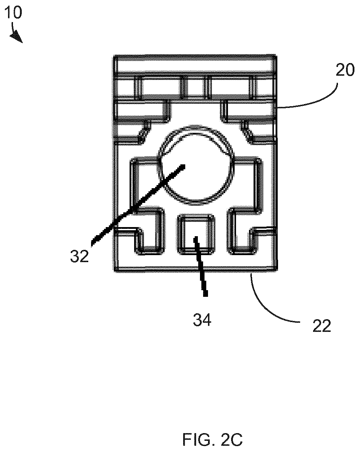

FIG. 2A shows a perspective view of a closed micro-duct grip 10, FIG. 2B shows a perspective view of an open micro-duct grip 10, and FIG. 2C show a top view of closed micro-duct grip 10. Micro-duct grip 10 includes base unit 20 and locking unit 22. Locking unit 22 fits down into an opening 26 formed in base unit 20 to grip and tighten around an inserted micro-duct 18 as shown in FIG. 1.

Base unit 20 includes a mounting member 24 that inserts into slot 16 of rack 14 described above in FIG. 1. An inside wall of opening 26 includes a curved semicircular channel 28 and a back wall 60 of locking unit 22 includes a curved semicircular channel 30. Sliding locking unit 22 down into opening 26, moves channels 28 and 30 together forming a hole 32 configured to receive and press fit against micro-duct 18. A rectangular cavity 34 in locking unit 22 and an opening 34 in base unit 20 are used during a plastic molding process to form grip 10.

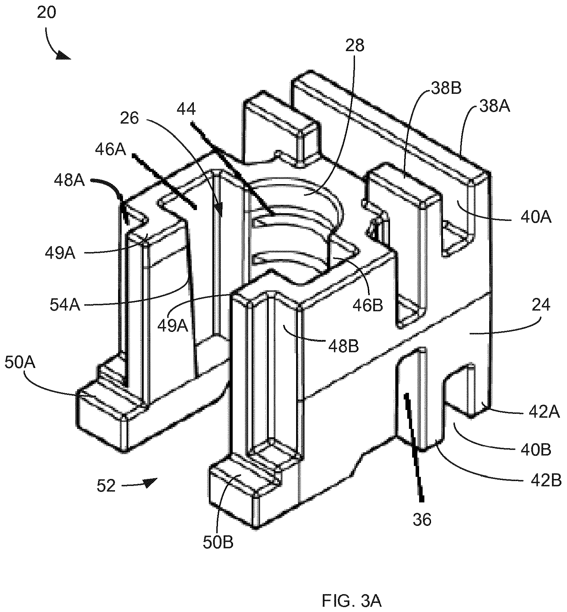

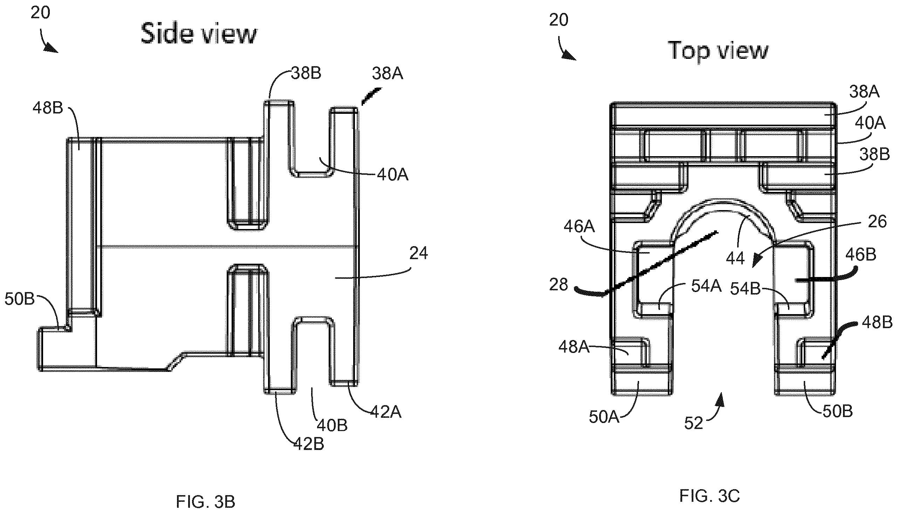

FIG. 3A shows a perspective view of base unit 20, FIG. 3B shows a side view of base unit 20, and FIG. 3C shows a top view of base unit 20. Mounting member 24 includes a pair of walls 38A and 38B that extend upwards forming an upper channel 40A. A pair of walls 42A and 42B extend downward forming a lower channel 40B. Mounting member 24 is sized so walls 38A and 42A slide into slots 16 formed in rack 14 of FIG. 1. Upper and lower rails 17 of rack 14 slide in channels 40A and 40B. Upper walls 38A and 38B press against opposite sides of an upper rail 17 and lower walls 42A and 42B press against opposite sides of a lower rail 17 holding grip 10 securely in rack 14.

As described above, an inner wall of opening 26 includes curved channel 28. A set of rubber collars 44 extend around the inside of channel 28 and provide strain relief for the inserted micro-duct 18. Rubber collars 44 also increase the friction between grip 10 and micro-duct 18. Opposing side walls of opening 26 include tapered wedge-shaped cavities 46A and 46B that slidingly receive back wall 60 of locking unit 22. Front walls 54A and 54B of cavities 46A and 46B, respectively, are sloped/tapered allowing locking member 22 to wedge into opening 26 and against micro-duct 18.

Cavities 48A and 48B extend down front corners of base unit 20 forming L-shaped arms 49A and 49B. Arms 49 insert into channels formed in a front end of locking unit 22. Steps 50A and 50B extend out of the front end of base unit 20 and are offset below bottom floors of cavities 48. A slot 52 extends through the bottom floor of base unit 20 from the front end into opening 26.

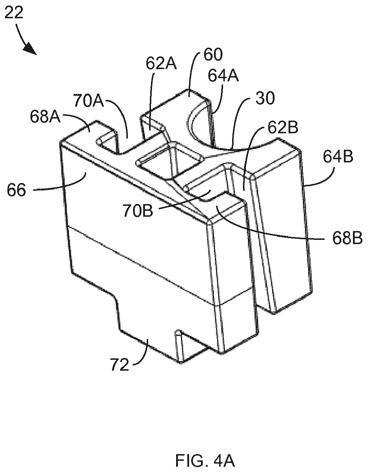

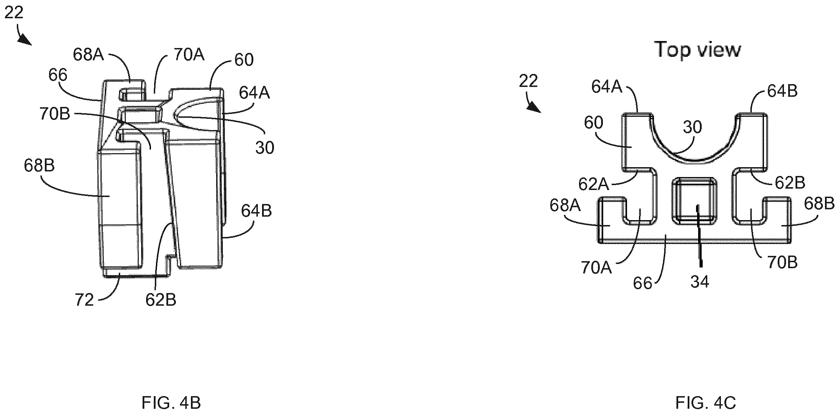

FIG. 4A shows a perspective view of locking unit 22, FIG. 4B shows a perspective side view of locking unit 22, and FIG. 3C shows a top view of locking unit 22. A back wall 60 of locking unit 22 includes inclined/tapered front sides 62A and 62B and back sides 64A and 64B. Inclined front sides 62 cause wall 60 to have a tapered wedge shaped profile that fit into tapered wedged shaped cavities 46 of base unit 20.

A front wall 66 includes two backward extending arms 68A and 68B that form L-shapes slots 70A and 70B. Slots 70 receive and slide over L-shapes arms 49 that extend out from the front end of base unit 20. A tab 72 extends down from the bottom end of locking unit 22 and seats partially down into slot 52 of base unit 20.

Referring to FIGS. 1-5, mounting member 24 of base unit 20 slides into one of racks 14 to a desired location as described above. A micro-duct 18 is placed into opening 26 of base unit 20. Locking unit 22 is then inserted down into opening 26 of base unit 20. Back wall 60 of locking unit 22 slides down into cavities 46 formed in side walls of base unit 20. Arms 68 extending back from front wall 66 of locking unit 22 slide down into cavities 48 formed on the front end of base unit 20.

The wedge shaped tapered profile of back wall 60 allows the gradual tightening of micro-duct 18 in between channels 28 and 30 while locking unit 22 is inserted into opening 26 of base unit 20. When fully closed, micro-duct grip 10 presses tightly against micro-duct 18 maintaining a strong persistent axial pull force. The diameter of cylindrical hole 32 formed by channels 28 and 30 may be slightly smaller than the diameter of micro-duct 18 to better restrain micro-duct 18 in grip 10.

As shown in FIG. 2A and 3A, a gap 74 is exists between the bottom floor of cavities 48 and the top face of steps 50. In the fully inserted position, the bottom sides of front wall 66 sit on the bottom floors of cavities 48 and extend partially over the top face of steps 50 forming gaps 74. Gaps 74 may facilitate the opening of grip 10. For example, a hand or screwdriver may be inserted into gaps 74 to pull locking unit 22 up and out of base unit 20.

Micro-duct grip 10 is compact and in one example is made from plastic, thus costing less and weighing less than metallic grips. However, other materials, such as metal, can also be used. No tools or screwing is needed to close micro-duct grip 10 . Grip 10 is simple to use and can be quickly attached and detached to micro-ducts 18.

References above have been made in detail to preferred embodiment. Examples of the preferred embodiments were illustrated in the referenced drawings. While preferred embodiments where described, it should be understood that this is not intended to limit the invention to one preferred embodiment.

## Claims

1. A fiber-optic tube holder (10) comprising:
a base member (20) including:
an opening (26) for receiving a tube (18),
a back end of the opening (26) including a first channel (28) for retaining a first side of the tube (18), and
sides of the opening (26) including a first pair of tapered cavities (46A, 46B), and
a front end including a second pair of cavities (48A, 48B) separated by a slot (52); and
a locking member (22) including:
a back wall (60) including a second channel (30) for retaining a second side of the tube (18) and having a tapered profile for inserting down into the first pair of tapered cavities (46A, 46B) in the base member (20); and
a front wall (66) extending out in front of the back wall (60), the front wall (66) including arms (68A, 68B) being configured to slide down into the second pair of cavities (48A, 48B) in the base member (20).

## Patentansprüche

1. Halter (10) für ein faseroptisches Rohr, umfassend:
ein Basisbauteil (20), umfassend:
eine Öffnung (26) zum Aufnehmen eines Rohrs (18),
wobei ein hinteres Ende der Öffnung (26) einen ersten Kanal (28) zum Halten einer ersten Seite des Rohrs (18) umfasst, und
wobei Seiten der Öffnung (26) ein erstes Paar von sich verjüngenden Hohlräumen (46A, 46B) umfassen, und
wobei ein vorderes Ende ein zweites Paar von Hohlräumen (48A, 48B) umfasst, die durch einen Schlitz (52) separiert sind; und
ein Verriegelungsbauteil (22), umfassend:
eine hintere Wand (60), die einen zweiten Kanal (30) zum Halten einer zweiten Seite des Rohrs (18) umfasst, mit einem sich verjüngenden Profil zum Einsetzen nach unten in das erste Paar von sich verjüngenden Hohlräumen (46A, 46B) in dem Basisbauteil (20);
und eine vordere Wand (66), die sich vor die hintere Wand (60) erstreckt, wobei die vordere Wand (66) Arme (68A, 68B) umfasst, die dazu konfiguriert sind, nach unten in das zweite Paar von Hohlräumen (48A, 48B) in dem Basisbauteil (20) zu gleiten.

## Revendications

1. Support de tube de fibre optique (10) comprenant
un élément de base (20) comportant une ouverture (26) pour recevoir un tube (18),
une extrémité arrière de l'ouverture (26) comportant un premier canal (28) pour retenir un premier côté du tube (18),
des côtés de l'ouverture (26) comportant une première paire de cavités tronconiques (46A, 46B) et
une extrémité avant comportant une seconde paire de cavités (48A, 48B) séparées par une encoche (52), et
un élément de verrouillage (22) comportant
une paroi arrière (60) comportant un second canal (30) pour retenir un second côté du tube (18) et ayant un profil tronconique pour s'insérer dans la première paire de cavités tronconiques (46A, 46B) de l'élément de base (20) et
une paroi avant (66) s'étendant devant la paroi arrière (60), cette paroi avant (60) comportant des bras (68A, 68B) configurés pour descendre dans la seconde paire de cavités (48A, 48B) de l'élément de base (20).
